# EUROPÄISCHE PATENTANMELDUNG

(11) **EP 3 825 789 A1**
(43) Veröffentlichungstag der Anmeldung: **26.05.2021**
(21) Anmeldenummer: 19210379.4
(22) Anmeldetag: 20.11.2019
(51) Int. Cl.: G05B 13/04, G05B 19/418, G05B 19/042

(54) **FERNSTEUERUNG EINER ANLAGE ZUM HERSTELLEN UND/ODER BEHANDELN EINES WALZGUTS AUS METALL**

(71) Anmelder: Primetals Technologies Germany GmbH, 91058 Erlangen (DE)
(72) Erfinder: Winter, Günther, 91077 Neunkirchen/Brand (DE); Zeiher, Hans-Juergen, 91056 Erlangen (DE)
(74) Vertreter: Metals@Linz

(57) **Zusammenfassung**

Sensoren (9) erfassen Zustände von Aggregaten (10) einer Anlage zum Herstellen und/oder Behandeln eines Walzguts (2) aus Metall und übermitteln sie an ein Automatisierungssystem (8). Die Zustandssignale (Z) sind zum Teil dimensionale Signale. Das Automatisierungssystem (8) ermittelt unter Berücksichtigung der Zustandssignale (Z) Steuersignale (S) für den Aggregaten (10) zugeordnete Aktoren (11) und steuert die Aktoren (11) entsprechend an. Das Automatisierungssystem (8) umfasst mindestens ein modellbasiertes System, welches das Verhalten der Anlage und/oder des Walzguts (2) in Echtzeit modelliert. Das Automatisierungssystem (8) übermittelt die Zustandssignale (Z), die Steuersignale (S) und/oder daraus abgeleitete Signale zumindest teilweise über ein offenes Datennetzwerk (16) an eine an einem Bedienort angeordnete Mensch-Maschine-Schnittstelle (17). Die übermittelten Signale umfassen mindestens ein dimensionales Signal.

## Beschreibung

### Gebiet der Technik

Die vorliegende Erfindung geht aus von einem Betriebsverfahren für eine Anlage zum Herstellen und/oder Behandeln eines Walzguts aus Metall.

Die vorliegende Erfindung geht weiterhin aus von einem Gesamtsystem einer Anlage zum Herstellen und/oder Behandeln eines Walzguts aus Metall.

### Stand der Technik

Derartige Anlagen und auch die zugehörigen Betriebsverfahren und Gesamtsysteme sind allgemein bekannt. Ein Beispiel einer derartigen Anlage ist eine Stranggießanlage, in welcher flüssiges Metall - beispielsweise Stahl - zu einem Metallstrang gegossen wird. Ein weiteres Beispiel einer derartigen Anlage ist ein Walzwerk, in welchem ein Metallstrang auf einen geringeren Querschnitt gewalzt wird. Auch eine Gieß-Walz-Anlage, also eine Anlage, bei der eine Stranggießanlage mit einem Walzwerk kombiniert ist, ist eine derartige Anlage.

Derartige Anlagen werden im Stand der Technik von Steuerleuten bedient. Die Steuerleute befinden sich in der Regel in einem Leitstand, der sich am Ort der Anlage befindet. Die Anordnung des Leitstandes ist derart, dass die Steuerleute einen direkten Sichtkontakt auf die Anlage haben.

Eine derartige Bedienung und Steuerung vor Ort ist im Stand der Technik bei schnellen und komplexen Prozessen wie sie beispielsweise in Walzwerken ablaufen, deshalb erforderlich, weil nur durch den direkten Sichtkontakt die erforderlichen schnellen Reaktionszeiten für Handeingriffe gewährleistet werden können.

Bei langsamen Prozessen wie sie beispielsweise - zumindest in manchen Fällen - in der chemischen Industrie ablaufen, ist eine Fernbedienung bekannt. Aufgrund des Umstands, dass eine Fernbedienung erfolgt, kann der Leitstand (oftmals auch als Leitwarte bezeichnet) an einem prinzipiell beliebigen Ort angeordnet sein. Insbesondere ist es nicht erforderlich, den Leitstand an einem Ort anzuordnen, in welchem er der direkten Einwirkung durch die Anlage (beispielsweise Lärm und Staubbelastung) ausgesetzt ist. Die Entfernung zur Anlage kann nach Bedarf sein. Sie kann beispielsweise wenige Kilometer betragen oder auch Hunderte von Kilometern entfernt sein.

### Zusammenfassung der Erfindung

Die Aufgabe der vorliegenden Erfindung besteht darin, Möglichkeiten zu schaffen, mittels derer auch für Anlagen zum Herstellen und/oder Behandeln eines Walzguts aus Metall eine Fernbedienung realisiert werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 8.

Erfindungsgemäß wird ein Betriebsverfahren für eine Anlage zum Urformen und/oder Umformen eines Walzguts aus Metall geschaffen,
- wobei mittels Sensoren für Zustände von Aggregaten der Anlage signifikante Zustandssignale erfasst werden,
- wobei die erfassten Zustandssignale von den Sensoren an ein Automatisierungssystem übermittelt werden,
- wobei ein Teil der von den Sensoren erfassten Zustandssignale dimensionale Signale sind,
- wobei das Automatisierungssystem unter Berücksichtigung der übermittelten Zustandssignale Steuersignale für den Aggregaten zugeordnete Aktoren ermittelt und die Aktoren entsprechend den ermittelten Steuersignalen ansteuert,
- wobei das Automatisierungssystem einen Teil der Steuersignale unter Berücksichtigung der dimensionalen Signale ermittelt,
- wobei das Automatisierungssystem mindestens ein modellbasiertes System umfasst, welches das Verhalten der Anlage und/oder des Walzguts auf Basis mathematisch-physikalischer Gleichungen in Echtzeit modelliert,
- wobei das Automatisierungssystem dem modellbasierten System einen Teil der Zustandssignale zuführt und mittels des modellbasierten Systems einen Teil der Steuersignale für die Aktoren ermittelt,
- wobei das Automatisierungssystem zumindest einen Teil der Zustandssignale, der Steuersignale und/oder aus den Zustandssignalen und/oder den Steuersignalen abgeleiteter Signale über ein offenes Datennetzwerk an eine an einem Bedienort angeordnete Mensch-Maschine-Schnittstelle übermittelt,
- wobei die an die Mensch-Maschine-Schnittstelle übermittelten Signale mindestens ein dimensionales Signal umfassen,
- wobei die Mensch-Maschine-Schnittstelle von einer Bedienperson durch Betätigung von vorbestimmten Steuerelementen der Mensch-Maschine-Schnittstelle Befehle entgegennimmt und mit den Befehlen korrespondierende Vorgaben über das offene Datennetzwerk an das Automatisierungssystem übermittelt,
- wobei das Automatisierungssystem die Vorgaben im Rahmen der Ermittlung der Steuersignale berücksichtigt,
- wobei die Übermittlung über das offene Datennetzwerk in beiden Kommunikationsrichtungen mit einer an Sicherheit grenzenden Wahrscheinlichkeit mit einer maximalen Latenzzeit von 50 ms erfolgt und die Bandbreite der Übermittlung zwischen dem Automatisierungssystem und der Mensch-Maschine-Schnittstelle so groß ist, dass innerhalb der maximalen Latenzzeit mindestens ein Videodatenstrom mit einer Auflösung von 800 mal 600 Pixeln pro Videobild und 20 Videobildern pro Sekunde übertragen werden kann,
- wobei das Automatisierungssystem in Abhängigkeit vom Zustand des Walzguts und/oder der Anlage entscheidet, welche dimensionalen Signale es an die Mensch-Maschine-Schnittstelle übermittelt, und/oder die Mensch-Maschine-Schnittstelle in Abhängigkeit vom Zustand des Walzguts und/oder der Anlage entscheidet, welche dimensionalen Signale sie in welchem Umfang an die Bedienperson ausgibt,
- wobei die Mensch-Maschine-Schnittstelle die Vorgaben dynamisch in Abhängigkeit von der Betätigung der vorbestimmten Steuerelemente und zusätzlich in Abhängigkeit vom Zustand des Walzguts und/oder der Anlage ermittelt.

Es ist möglich, dass das Walzgut erst noch gewalzt werden muss. Alternativ kann es sich um ein gewalztes Walzgut handeln.

Eine Behandlung eines Walzguts ist ein Vorgang, bei dem eine Eigenschaft des Walzguts permanent geändert wird. Es kann sich beispielsweise um einen Walzvorgang als solchen handeln. In diesem Fall ändert sich der Querschnitt des Walzguts, beispielsweise bei einem flachen Walzgut hauptsächlich die Dicke. Alternativ oder zusätzlich kann es sich beispielsweise um eine thermische Behandlung handeln, beispielsweise einen Kühlen in einer einem Walzwerk nachgeordneten Kühlstrecke oder in einer eigenständigen Glühe, insbesondere in einer sogenannten CAL = continuous annealing line. In diesem Fall ändern sich mikromechanische Eigenschaften des Walzguts, die ihrerseits wiederum die makromechanischen Eigenschaften wie beispielsweise Zugfestigkeit und Dehngrenze bestimmen. Alternativ kann es sich beispielsweise um ein Beschichten eines Walzguts handeln, beispielsweise ein Galvanisieren in einer CGL = continuous galvanizing line. In einer CGL erfolgt meist zusammen mit dem Beschichten auch eine thermische Behandlung. Keine Behandlung des Walzguts ist beispielsweise ein reiner Transport von A nach B.

Aufgrund der Dimensionalität eines Teils der Zustandssignale und der hierauf aufbauenden Auswertung derartiger Signale ist eine erheblich weitergehende Automatisierung des Betriebs der Anlage als im Stand der Technik möglich.

Aufgrund der Kommunikation zwischen dem Automatisierungssystem und der Mensch-Maschine-Schnittstelle über das offene Datennetzwerk kann die Mensch-Maschine-Schnittstelle an einem beliebigen Ort angeordnet sein.

Eine an Sicherheit grenzende Wahrscheinlichkeit bezeichnet einen Wahrscheinlichkeitsgrad von mindestens 99,95 %. Oftmals liegt der Wahrscheinlichkeitsgrad sogar noch höher, beispielsweise bei 99,99 % oder 99,999 %.

Die angegebene maximale Latenzzeit von 50 ms stellt eine Minimalanforderung dar. Vorzugsweise liegt die maximale Latenzzeit bei einem niedrigeren Wert, beispielsweise 20 ms oder 10 ms. Auch noch kleinere Werte von beispielsweise 5 ms, 2 ms oder 1 ms sind denkbar.

Die geforderte Bandbreite, also eine Bandbreite, die eine Übermittlung eines Videodatenstrom mit einer Auflösung von 800 mal 600 Pixeln pro Videobild und 20 Videobildern pro Sekunde ermöglicht, stellt eine Minimalanforderung dar. Selbstverständlich können auch größere Bandbreiten realisiert werden, die entsprechend leistungsfähiger sind. Dadurch können beispielsweise mehrere derartige Datenströme übertragen werden und/oder die Videobilder eine höhere Auflösung aufweisen und/oder mehr Bilder pro Sekunde übertragen werden. Entscheidend ist auch nicht, dass ein derartiger Videodatenstrom übertragen wird. Entscheidend ist, dass die Bandbreite eine derartige Übertragung ermöglicht. Das angegebene Bildseitenverhältnis von 800:600 = 4:3 ist ebenfalls nicht zwingend erforderlich.

Aufgrund der angegebenen Performanz des offenen Datennetzwerks ist in beide Kommunikationsrichtungen sowohl bezüglich des Umfangs der übermittelten Signale als auch bezüglich der Latenzzeit ein hinreichender Datenaustausch gewährleistet. Aufgrund der Übermittlung und/oder Ausgabe von dimensionalen Signalen in Abhängigkeit vom Zustand des Walzguts und/oder der Anlage wird erreicht, dass der Bedienperson jeweils die momentan relevanten Signale mehr oder minder zentral angezeigt werden können. Aufgrund der Ermittlung der Vorgaben nicht nur in Abhängigkeit von der Betätigung der vorbestimmten Steuerelemente, sondern auch in Abhängigkeit vom Zustand des Walzguts und/oder der Anlage muss die Bedienperson nicht zwischen verschiedenen Steuerelementen hin und her wechseln, sondern kann stets die gleichen Steuerelemente bedienen. Dadurch können Bedienfehler deutlich reduziert und eventuell sogar vollständig vermieden werden.

Die Anlage kann, wie bereits erwähnt, eine Stranggießanlage und/oder ein Walzwerk umfassen. Dem Walzwerk kann eine Kühlstrecke nachgeordnet sein. Alternativ oder zusätzlich kann die Anlage eine Behandlungslinie zum thermischen Behandeln und/oder zur Oberflächenbehandlung des Walzguts umfassen, beispielsweise eine CAL oder eine CGL.

Vorzugsweise ist das offene Datennetzwerk zumindest in einem Teilabschnitt gemäß mindestens dem 5G-Standard ausgebildet. Insbesondere mit einem derartigen Standard lässt sich die erforderliche Performanz auf einfache Weise erreichen. Die Datenübermittlung kann vollständig oder teilweise drahtlos erfolgen. Es ist jedoch ebenso auch eine leitungsgebundene Datenübertragung möglich.

In einer weiter bevorzugten Ausgestaltung ist in der Mensch-Maschine-Schnittstelle ein geometrisch-konstruktives Modell der Anlage implementiert, wobei weiterhin die Mensch-Maschine-Schnittstelle zumindest einen Teil des geometrisch-konstruktiven Modells an die Bedienperson ausgibt. Hierbei hebt die Mensch-Maschine-Schnittstelle in dem ausgegebenen geometrisch-konstruktiven Modell oder dem ausgegebenen Teil des geometrisch-konstruktiven Modells optisch den Bereich oder mindestens einen der Bereiche hervor, den das Automatisierungssystem in Abhängigkeit vom Zustand des Walzguts und/oder der Anlage an die Mensch-Maschine-Schnittstelle übermittelt und/ oder aus dessen Bereich die dimensionalen Signale stammen, welche die Mensch-Maschine-Schnittstelle in Abhängigkeit vom Zustand des Walzguts und/oder der Anlage an die Bedienperson ausgibt, und/oder für den die Vorgaben bestimmt sind, welche die Mensch-Maschine-Schnittstelle dynamisch in Abhängigkeit vom Zustand des Walzguts und/oder der Anlage ermittelt. Dadurch wird für die Bedienperson die Erfassung des tatsächlichen Geschehens am Ort der Anlage erleichtert.

Geometrisch-konstruktive Modelle und deren Einbindung in eine Mensch-Maschine-Schnittstelle sind an sich bekannt. Rein beispielhaft kann auf die US 2006/0 241 793 A1 verwiesen werden. Im Gegensatz zur US 2006/0 241 793 A1 erfolgt die zustandsabhängige Hervorhebung im Rahmen der vorliegenden Erfindung aber nicht bei Notfällen oder über den normalen Betrieb der Anlage hinausgehenden Sonderzuständen, sondern im normalen Betrieb der Anlage.

Vorzugsweise erfolgt die Kommunikation zwischen dem Automatisierungssystem und der Mensch-Maschine-Schnittstelle in komprimierter Form. Datenkompression ist Fachleuten allgemein bekannt. Insbesondere für Videodaten kann auf den allgemein bekannten MPEG-Standard verwiesen werden.

Alternativ oder zusätzlich zu einer komprimierten Datenübermittlung ist es ebenso möglich, dass die Kommunikation zwischen dem Automatisierungssystem und der Mensch-Maschine-Schnittstelle in verschlüsselter Form erfolgt. Diese Vorgehensweise erhöht insbesondere den Schutz der Kommunikation vor unbefugtem Zugriff.

Im einfachsten Fall ist am Bedienort nur die Mensch-Maschine-Schnittstelle vorhanden. Es ist jedoch alternativ möglich, dass am Bedienort zusätzlich zu der Mensch-Maschine-Schnittstelle mindestens eine weitere Mensch-Maschine-Schnittstelle angeordnet ist. Wenn in diesem Fall die weitere Mensch-Maschine-Schnittstelle mit der erstgenannten Mensch-Maschine-Schnittstelle vernetzt ist, ist das Betriebsverfahren vorzugsweise dadurch ausgestaltet, dass die Bedienperson die Kommunikation mit dem Automatisierungssystem dynamisch von der Mensch-Maschine-Schnittstelle zu der weiteren Mensch-Maschine-Schnittstelle und zurück transferieren kann. Dadurch kann die Bedienperson insbesondere dynamisch festlegen, welche der Mensch-Maschine-Schnittstellen mit dem Automatisierungssystem kommuniziert.

Vorzugsweise sind die dem modellbasierten System von dem Automatisierungssystem zugeführten Zustandssignale zumindest teilweise dimensionale Signale. Dadurch wird auch die Auswertung der Zustandssignale durch das modellbasierte System verbessert.

Die Aufgabe wird weiterhin durch ein Gesamtsystem mit den Merkmalen des Anspruchs 9 gelöst. Vorteilhafte Ausgestaltungen des Gesamtsystem sind Gegenstand der abhängigen Ansprüche 10 bis 16.

Erfindungsgemäß wird ein Gesamtsystem einer Anlage zum Herstellen und/oder Behandeln eines Walzguts aus Metall geschaffen,
- wobei das Gesamtsystem am Ort der Anlage angeordnete Sensoren aufweist, mittels derer für Zustände von Aggregaten der Anlage signifikante Zustandssignale erfasst werden,
- wobei das Gesamtsystem ein Automatisierungssystem aufweist, das mit den Sensoren zur Übermittlung der erfassten Zustandssignale von den Sensoren an das Automatisierungssystem verbunden ist,
- wobei ein Teil der von den Sensoren erfassten Zustandssignale dimensionale Signale sind,
- wobei das Gesamtsystem am Ort der Anlage angeordnete und den Aggregaten zugeordnete Aktoren aufweist,
- wobei das Automatisierungssystem unter Berücksichtigung der übermittelten Zustandssignale Steuersignale für Aktoren ermittelt,
die mit dem Automatisierungssystem zur Ansteuerung der Aktoren entsprechend den ermittelten Steuersignalen verbunden sind,
- wobei das Automatisierungssystem einen Teil der Steuersignale unter Berücksichtigung der dimensionalen Signale ermittelt,
- wobei das Automatisierungssystem mindestens ein modellbasiertes System umfasst, welches das Verhalten der Anlage und/oder des Walzguts auf Basis mathematisch-physikalischer Gleichungen in Echtzeit modelliert,
- wobei das Automatisierungssystem dem modellbasierten System einen Teil der Zustandssignale zuführt und mittels des modellbasierten Systems einen Teil der Steuersignale für die Aktoren ermittelt,
- wobei das Gesamtsystem eine an einem Bedienort angeordnete Mensch-Maschine-Schnittstelle aufweist, die mit dem Automatisierungssystem über ein offenes Datennetzwerk verbunden ist,
- wobei das Automatisierungssystem zumindest einen Teil der Zustandssignale, der Steuersignale und/oder aus den Zustandssignalen und/oder den Steuersignalen abgeleiteter Signale über das offene Datennetzwerk an die Mensch-Maschine-Schnittstelle übermittelt,
- wobei die an die Mensch-Maschine-Schnittstelle übermittelten Signale mindestens ein dimensionales Signal umfassen,
- wobei die Mensch-Maschine-Schnittstelle von einer Bedienperson durch Betätigung von vorbestimmten Steuerelementen der Mensch-Maschine-Schnittstelle Befehle entgegennimmt und mit den Befehlen korrespondierende Vorgaben über das offene Datennetzwerk an das Automatisierungssystem übermittelt,
- wobei das Automatisierungssystem die Vorgaben im Rahmen der Ermittlung der Steuersignale berücksichtigt,
- wobei die Übermittlung über das offene Datennetzwerk in beiden Kommunikationsrichtungen mit einer an Sicherheit grenzenden Wahrscheinlichkeit mit einer maximalen Latenzzeit von 50 ms erfolgt und die Bandbreite der Übermittlung zwischen dem Automatisierungssystem und der Mensch-Maschine-Schnittstelle so groß ist, dass innerhalb der maximalen Latenzzeit mindestens ein Videodatenstrom mit einer Auflösung von 800 mal 600 Pixeln pro Videobild und 20 Videobildern pro Sekunde übertragen werden kann,
- wobei das Automatisierungssystem in Abhängigkeit vom Zustand des Walzguts und/oder der Anlage entscheidet, welche dimensionalen Signale es an die Mensch-Maschine-Schnittstelle übermittelt, und/oder die Mensch-Maschine-Schnittstelle in Abhängigkeit vom Zustand des Walzguts und/oder der Anlage entscheidet, welche dimensionalen Signale sie in welchem Umfang an die Bedienperson ausgibt,
- wobei die Mensch-Maschine-Schnittstelle die Vorgaben dynamisch in Abhängigkeit von der Betätigung der vorbestimmten Steuerelemente und zusätzlich in Abhängigkeit vom Zustand des Walzguts und/oder der Anlage ermittelt.

Die vorteilhaften Ausgestaltungen des Gesamtsystems und die hiermit erzielten Vorteile korrespondieren mit den Ausgestaltungen des Betriebsverfahrens und den hierdurch jeweils erzielten Vorteilen.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Anlage der Grundstoffindustrie und ein Automatisierungssystem,
- FIG 2: ein Coil beim Haspeln,
- FIG 3: das Coil von FIG 2 nach dem Haspeln,
- FIG 4: das Automatisierungssystem von FIG 1 und eine Mensch-Maschine-Schnittstelle,
- FIG 5: die Mensch-Maschine-Schnittstelle von FIG 4,
- FIG 6 bis 14: eine Fertigstraße beim Fädeln eines Bandkopfes,
- FIG 15: eine Darstellung eines geometrisch-konstruktiven Modells einer Anlage der Grundstoffindustrie und
- FIG 16: mehrere Anlagen der Grundstoffindustrie mit Automatisierungssystemen und mehrere Mensch-Maschine-Schnittstellen.

### Beschreibung der Ausführungsformen

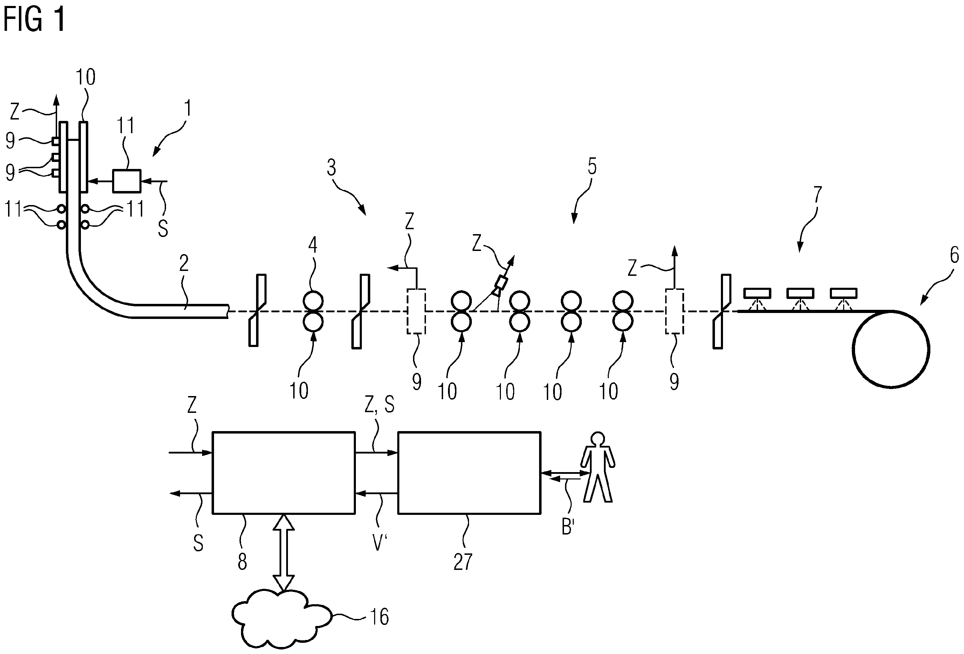

Gemäß FIG 1 weist eine Anlage der Grundstoffindustrie eine Teilanlage 1 zum Urformen eines Walzguts 2 aus Metall auf. Das Walzgut 2 ist also ein Festkörper, im Falle des Urformens das bereits erstarrte Metall. Die Teilanlage 1 zum Urformen des Walzguts 2 kann beispielsweise entsprechend der Darstellung in FIG 1 als Stranggießanlage ausgebildet sein. Das Metall kann beispielsweise Stahl oder Aluminium sein. Mittels der Teilanlage 1 kann beispielsweise als Walzgut 2 eine Bramme gegossen werden (= Urformung), die später zu einem Metallband umgeformt wird.

Gemäß FIG 1 weist die Anlage der Grundstoffindustrie weiterhin auch eine Teilanlage 3 zum Umformen des Walzguts 2 auf. Die Teilanlage 3 zum Umformen des Walzguts 1 kann insbesondere als Walzwerk ausgebildet sein. Das Walzwerk kann ein eingerüstiges Vorwalzwerk 4 oder eine mehrgerüstige Vorwalzstraße sein. Alternativ kann das Walzwerk ein Steckelwalzwerk oder eine mehrgerüstige Fertigstraße 5 sein. Beim Vorwalzen und beim Fertigwalzen ist das Walzgut 2 heiß. Das Walzwerk kann aber auch ein Kaltwalzwerk sein. Im Falle einer mehrgerüstigen Fertigstraße 5 ist der Fertigstraße in der Regel ein Haspel 6 nachgeordnet. Im Falle einer Fertigstraße 5 kann weiterhin dem Walzwerk eine Kühlstrecke 7 nachgeordnet sein. Die Kühlstrecke 7 ist, sofern sie vorhanden ist, zwischen dem Walzwerk und dem Haspel 6 angeordnet. Bei einem Kaltwalzwerk kann dem Walzwerk beispielsweise eine Beizlinie vorgeordnet sein. Im konkreten Fall ist die Teilanlage 3 zum Umformen des Walzguts 1 entsprechend der Darstellung in FIG 1 als eingerüstiges Vorwalzwerk 4 (das demzufolge also nur ein einzelnes Vorwalzgerüst aufweist) mit einer nachgeordneten mehrgerüstigen Fertigstraße 5, einem Haspel 6 und einer Kühlstrecke 7 zwischen Fertigstraße 5 und Haspel 6 ausgebildet. Weiterhin ist im Rahmen der konkreten Ausgestaltung von FIG 1 das Walzgut 2 ein flaches Walzgut. All diese konkreten Ausgestaltungen sind aber nur rein beispielhaft zu sehen. Weiterhin sind von allen Walzgerüsten in FIG 1 nur die Arbeitswalzen dargestellt. Die Walzgerüste können aber ohne weiteres auch weitere Walzen aufweisen, insbesondere Stützwalzen und/oder Zwischenwalzen. Entsprechende Walzgerüste und deren Ausgestaltungen sind Fachleuten allgemein bekannt.

Auch andere Ausgestaltungen der Anlage der Grundstoffindustrie sind möglich. Beispielsweise kann die Anlage als (isolierte) Behandlungslinie zum thermischen Behandeln und/oder zur Oberflächenbehandlung des Walzguts 2 ausgebildet sein. Bei einer Behandlungslinie zum thermischen Behandeln des Walzguts werden mikromechanische Eigenschaften des Walzguts 2 dauerhaft verändert. Bei einer Behandlungslinie zum thermischen Behandeln des Walzguts werden mikromechanische Eigenschaften - beispielsweise Korngröße und Phasenanteile - geändert. Eine typische Behandlungslinie zum thermischen Behandeln ist eine Glühe. Bei einer Behandlungslinie zur Oberflächenbehandlung des Walzguts wird - wie schon der Name sagt - die Oberfläche des Walzguts verändert. Typische Behandlungslinien zur Oberflächenbehandlung sind eine Beizlinie und eine Beschichtungslinie. In einer Beschichtungslinie erfolgt oftmals zusammen mit der Oberflächenbehandlung auch eine thermische Behandlung des Walzguts 2.

Die Anlage der Grundstoffindustrie weist entsprechend der Darstellung in FIG 1 sowohl die Teilanlage 1 zum Urformen des Walzguts 2 als auch die Teilanlage 3 zum Umformen des Walzguts 2 auf. Prinzipiell ist es aber ausreichend, wenn nur die Teilanlage 1 zum Urformen des Walzguts 2 oder die Teilanlage 3 zum Umformen des Walzguts 2 oder eine andere der oben genannten Anlagen vorhanden ist.

Die Anlage der Grundstoffindustrie wird von einem Automatisierungssystem 8 gesteuert. Das Automatisierungssystem 8 ist in der Regel am Ort der Anlage angeordnet. Dies ist jedoch nicht zwingend erforderlich. Das Automatisierungssystem 8 kann beispielsweise an einem anderen Ort angeordnet sein und mit der Anlage über Datenverbindungen kommunizieren. Beispielsweise kann das Automatisierungssystem 8 in der Cloud angeordnet sein. Es sind auch Mischformen möglich, dass also ein Teil des Automatisierungssystems 8 vor Ort angeordnet ist und ein anderer Teil des Automatisierungssystems 8 an einem anderen Ort angeordnet ist. Die Anlage der Grundstoffindustrie weist weiterhin eine Vielzahl von Sensoren 9 auf. Mittels der Sensoren 9 werden Zustandssignale Z erfasst, die für Zustände von Aggregaten 10 der Anlage signifikant sind. Die erfassten Zustandssignale Z werden von den Sensoren 9 an das Automatisierungssystem 8 übermittelt. Die Sensoren 9 sind zu diesem Zweck mit dem Automatisierungssystem 8 verbunden. Das Automatisierungssystem 8 ermittelt Steuersignale S für Aktoren 11 Das Automatisierungssystem 8 berücksichtigt bei der Ermittlung der Steuersignale S die Zustandssignale Z. Das Automatisierungssystem 8 steuert die Aktoren 11 entsprechend den ermittelten Steuersignalen S an. Die Aktoren 11 sind zu diesem Zweck mit dem Automatisierungssystem 8 verbunden. Die Aktoren 11 sind den Aggregaten 10 der Anlage zugeordnet. Das Automatisierungssystem 8 berücksichtigt bei der Ermittlung der Steuersignale S die übermittelten Zustandssignale Z.

In FIG 1 sind nur einige der Sensoren 9, Aggregate 10 und Aktoren 11 eingezeichnet. Allgemein gesprochen können die Aggregate 10, Sensoren 9 und Aktoren 11 nach Bedarf bestimmt sein. Sowohl die Sensoren 9 als auch die Aggregate 10 als auch die Aktoren 11 sind jedoch am Ort der Anlage angeordnet. Nachstehend werden einige mögliche Aggregate 10 und zugehörige Sensoren 9 und Aktoren 11 erläutert. Die Erläuterungen sind aber nur rein beispielhaft zu verstehen. Nach Bedarf können auch andere Aggregate 10 vorhanden sein und/oder im Falle gleicher Aggregate 10 andere oder weitere Sensoren und/oder andere oder weitere Aktoren 11 vorhanden sein.

So kann beispielsweise eines der Aggregate 10 als Stranggießkokille der Stranggießanlage ausgebildet sein. In diesem Fall können beispielsweise an den Seitenwänden der Stranggießkokille als Sensoren 9 Temperatursensoren angeordnet sein. Mittels der Temperatursensoren wird in diesem Fall ein in der Regel zweidimensional verteiltes Muster an Temperaturen erfasst. Die Auswertung der erfassten Temperaturen durch das Automatisierungssystem 8 dient insbesondere der rechtzeitigen Erkennung eines sogenannten Schalenhängers und der damit verbundenen Gefahr eines Kokillendurchbruchs. Entsprechende Vorgehensweisen sind Fachleuten allgemein bekannt. Weiterhin können der Gießspiegel und die Höhenposition der Stranggießkokille erfasst werden. Angesteuert werden von Automatisierungssystem 8 insbesondere die Oszillation der Stranggießkokille (in Amplitude und gegebenenfalls auch Frequenz) und die Strangführungsrollen, mittels derer die Strangabzugsgeschwindigkeit eingestellt wird.

Ein anderes der Aggregate 10 kann beispielsweise als Walzgerüst ausgebildet sein. Im Falle eines Walzgerüsts können mittels entsprechender Sensoren beispielsweise die Drehzahl und das Drehmoment erfasst werden, mittels derer Walzen des Walzgerüsts (meist die Arbeitswalzen) angetrieben werden. Auch können mittels entsprechender Sensoren die Walzkraft und der Walzspalt bzw. die Anstellposition der Arbeitswalzen erfasst werden. Mittels eines dem jeweiligen Walzgerüst vorgeordneten oder nachgeordneten Schlingenhebers kann der Zug im Walzgut 2 vor bzw. hinter dem jeweiligen Walzgerüst erfasst werden. Angesteuert können vom Automatisierungssystem 8 insbesondere der Antrieb der Walzen des jeweiligen Walzgerüsts, Stellglieder zum Einstellen des Walzspaltes oder der Walzkraft des jeweiligen Walzgerüsts sowie, bezogen auf das jeweilige Walzgerüst, Stellglieder zum Einstellen einer Walzenbiegung, Stellglieder zum Einstellen eines Walzspaltkeils, Heizelemente, Kühlelemente, eine Walzenschmierung und andere mehr. Mittels einer Kamera kann beispielsweise ein Bild des Walzguts 2 erfasst werden, wie es aus dem jeweiligen Walzgerüst auftritt.

In bestimmten Abschnitten der Anlage - beispielsweise zwischen dem Vorwalzwerk 4 und der Fertigstraße 5, zwischen der Fertigstraße 5 und der Kühlstrecke 7 sowie zwischen der Kühlstrecke 7 und dem Haspel 6 - können beispielsweise Temperaturmessplätze angeordnet sein, mittels derer die jeweilige Temperatur des Walzguts 2 erfasst wird. Die vor der Fertigstraße 5 erfassten Temperaturen können vom Automatisierungssystem 8 insbesondere für die Ermittlung von Walzkräften der Walzgerüste der Fertigstraße 5 und für die Ermittlung der Ansteuerung von Zwischengerüstkühlungen in der Fertigstraße 5 verwendet werden. Die hinter der Fertigstraße 5 erfassten Temperaturen können vom Automatisierungssystem 8 insbesondere für die Adaptierung eines Modells der Fertigstraße 5 und für die Ermittlung der Ansteuerung von Kühleinrichtungen der Kühlstrecke 7 verwendet werden. Die hinter der Kühlstrecke 7 erfassten Temperaturen können vom Automatisierungssystem 8 insbesondere für die Adaptierung eines Modells der Kühlstrecke 7 verwendet werden.

In bestimmten Abschnitten der Anlage - beispielsweise vor dem Vorwalzwerk 4, zwischen dem Vorwalzwerk 4 und der Fertigstraße 5 und hinter der Fertigstraße 5 - können weiterhin Scheren angeordnet sein, die vom Automatisierungssystem 8 bei Bedarf zum Trennen des Walzguts 2 in voneinander verschiedene Abschnitte oder zum Schopfen der Abschnitte des Walzguts 2 angesteuert werden können.

Die Sensoren 9 umfassen somit zum einen "normale" Sensoren, die "normale" Zustandssignale Z wie beispielsweise Drehzahl, Drehmoment oder Strom eines Antriebs der Anlage (beispielsweise eines Antriebs für ein Walzgerüst), Position (beispielsweise Walzspalt oder Anstellposition von Arbeitswalzen), Druck (beispielsweise Walzkraft) usw. erfassen. Derartige Zustandssignale Z sind dimensionslos in dem Sinne, dass bereits ein einzelnes Zustandssignal Z als solches unabhängig von anderen Zustandssignalen Z sinnvoll auswertbar ist.

Weiterhin umfassen die Sensoren 9 zum anderen aber auch Erfassungssysteme, die als Zustandssignale Z dimensionale Signale liefern und dem Automatisierungssystem 8 zur Verfügung stellen. Dimensionale Signale sind Signale, bei denen ein einzelner individueller Messwert ohne Berücksichtigung der ihm zeitlich und/oder örtlich benachbarten Werte keine vernünftige Information über den Zustand des Walzguts 2 relativ zu einem bestimmten Aggregat der Anlage oder über die Anlage selbst liefert. Ein typisches Beispiel für ein dimensionales Signal ist ein akustisches Signal, das mittels eines Mikrofons oder eines anderen Schallsensors erfasst wird. Bei einem derartigen Signal ist erst die zeitliche Abfolge und die dadurch definierte Schwingung sinnvoll auswertbar. Ein weiteres typisches Beispiel sind zwei- oder dreidimensionale bzw. allgemein mehrdimensionale Bilder. Derartige Bilder können "normale" zweidimensionale optische Bilder sein, wie sie mit einer Kamera erfasst werden. Es kann sich aber auch um dreidimensionale Bilder handeln, also Bilder, die zusätzlich auch eine Tiefeninformation mit umfassen. Derartige Tiefenbilder können beispielsweise auf Radartechniken oder Lidartechniken oder Interferenztechniken basieren. Auch die dimensionalen Signale können dem Automatisierungssystem 8 vor Ort zugeführt und von diesem ausgewertet werden, um daraus Steuersignale S für die Aktoren 11 zu ermitteln.

Erfasste Bilder können beispielsweise derart bestimmt sein, dass sie eine Bestimmung der Lage des Walzguts 2 relativ zu einem Aggregat 10 der Anlage ermöglichen. Ein typisches Beispiel hierfür ist in dem Fall, dass das Walzgut 2 ein Metallband ist, der seitliche Versatz des Metallbandes in Verbindung mit dem Winkel, unter dem das Metallband in ein Walzgerüst - beispielsweise ein Walzgerüst der Fertigstraße 5 - einläuft oder aus einem Walzgerüst ausläuft. Es können aber auch andere Zustände des Walzguts 2 erfasst werden, beispielsweise dessen Bewegungsrichtung als solche oder dessen Geschwindigkeit.

Das Automatisierungssystem 8 ermittelt einen Teil der Steuersignale S unter Verwertung ausschließlich der "normalen" Zustandssignale Z, also ohne Verwertung von dimensionalen Signalen. Für die Ermittlung mancher derartiger Steuersignale S kann das Automatisierungssystem 8 ein modellbasiertes System umfassen, welches das Verhalten der Anlage und/oder des Walzguts 2 auf Basis mathematisch-physikalischer Gleichungen modelliert. Diese Modellierungen müssen in Echtzeit erfolgen, da sie der Ermittlung von Steuersignalen S dienen. Ein Beispiel eines derartigen modellbasierten Systems ist die Modellierung der Umformung von Stahl in der Fertigstraße 5 oder die Modellierung des zeitlichen Verlaufs der Temperatur und der Phasenumwandlung von Stahl in der Fertigstraße 5 und/oder der Kühlstrecke 7. Beispiele derartiger Systeme sind ausführlich in der WO 2003/000 940 A1, der WO 2003/045 599 A1, der WO 2004/076 085 A2 und der WO 2005/076 092 A1 erläutert.

Zumindest ein Teil der Zustandssignale Z wird also von dem Automatisierungssystem 8 dem jeweiligen dem modellbasierten System zugeführt und im Rahmen der Ermittlung der entsprechenden Steuersignale S berücksichtigt. Zumindest manche der Steuersignale S werden von dem Automatisierungssystem 8 somit mittels eines entsprechenden modellbasierten Systems ermittelt.

Einen anderen Teil der Steuersignale S ermittelt das Automatisierungssystem 8 unter Berücksichtigung der dimensionalen Signale. Beispielsweise können, wie bereits erwähnt, mittels Kameras Bilder des Walzguts 2 erfasst werden, die das Auslaufen des Walzguts 2 aus den Walzgerüsten der Fertigstraße 5 zeigen. Aufbauend auf den erfassten Bildern können dann die seitliche Lage und der Winkel ermittelt werden, unter denen das Walzgut 2 aus dem jeweiligen Walzgerüst ausläuft. In Abhängigkeit von diesen Größen kann sodann die Schwenklage des entsprechenden Walzgerüsts nachgeführt und korrigiert werden.

Ein Beispiel einer entsprechenden Vorgehensweise findet sich in der WO 2017/133 814 A1. Zur Auswertung der dimensionalen Signale können auch selbstlernende Systeme verwendet werden. Rein beispielhaft kann diesbezüglich auf die WO 2018/050 438 A2 verwiesen werden. In beiden Fällen können intelligente Assistenzsysteme geschaffen werden, welche zusätzliche Steuerungsfunktionen automatisiert übernehmen, welche im Stand der Technik von einem Menschen vorgenommen werden.

Die Vorgehensweise gemäß der WO 2017/133 814 A1 ist zugleich auch ein Beispiel dafür, dass einem modellbasierten System des Automatisierungssystems 8 ein dimensionales Zustandssignal Z zugeführt und von diesem ausgewertet und im Rahmen der Ermittlung von Steuersignalen S berücksichtigt wird. Es sind aber auch andere Ausgestaltungen möglich.

Das genannte Beispiel bewirkt eine entsprechende Bandlaufsteuerung in der Fertigstraße 5. Eine analoge Vorgehensweise ist auch für das Vorwalzwerk 4 möglich. Die Steuerung des Bandlaufs in einem Vorwalzwerk 4 ist Fachleuten allgemein als Wedge-and-Camber-Control bekannt. In ähnlicher Weise können auch eine Keil- und Säbelsteuerung oder eine Planheitsregelung automatisiert werden.

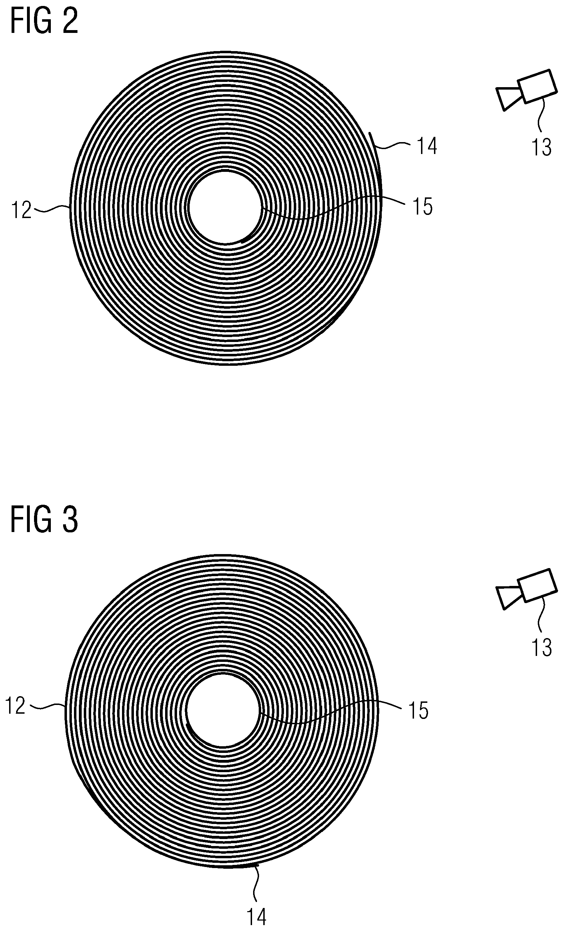

Ein weiteres Beispiel ist das Aufhaspeln eines Bandes nach dem Walzen zu einem Coil 12. In diesem Fall kann beispielsweise entsprechend der Darstellung in FIG 2 mit einer entsprechend angeordneten Kamera 13 erfasst werden, wenn der Bandfuß 14 (also das Ende des Bandes) eine bestimmte Stellung relativ zum Coilauge 15 aufweist, beispielsweise sich in Drehrichtung des Coils 12 gesehen etwas mehr als 90° vor dem untersten Punkt des Coils 12 befindet. In diesem Fall kann das Aufhaspeln des Bandes von dem Automatisierungssystem 8 derart gesteuert werden, dass beim Beenden des Haspelns die Strecke vom Bandfuß 14 zum untersten Punkt des gehaspelten Coils 12 entsprechend der Darstellung in FIG 3 nur wenige Prozent - vorzugsweise 5 % oder weniger - des Coilumfangs entspricht. Der Bandfuß 14 ist dadurch fast direkt unterhalb des Coilauges 15 angeordnet und wird beim Absetzen des Coils 12 auf einer Unterlage geklemmt. Ein unbeabsichtigtes Aufspringen der letzten Windung des Coils 12 kann dadurch vermieden werden.

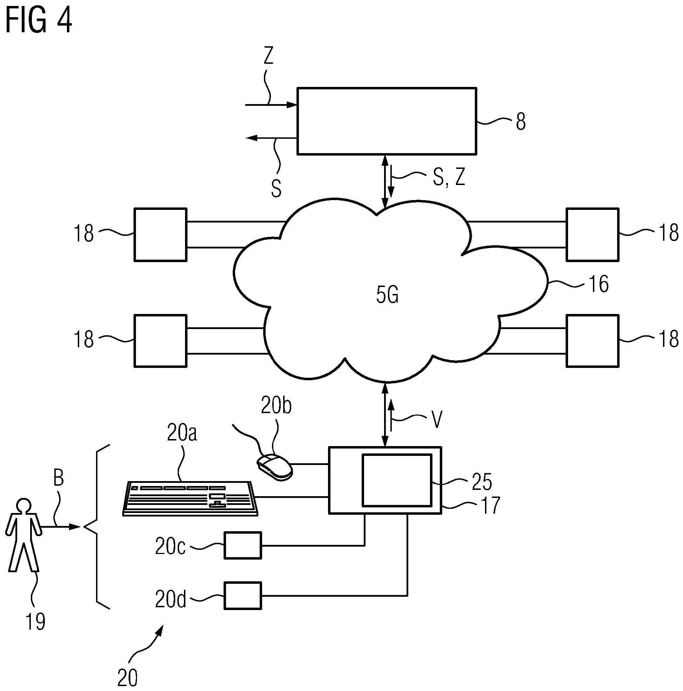

Das Automatisierungssystem 8 ist entsprechend der Darstellung in FIG 4 über ein Datennetzwerk 16 mit einer Mensch-Maschine-Schnittstelle 17 verbunden. Die Mensch-Maschine-Schnittstelle 17 befindet sich - gegebenenfalls mit weiteren Mensch-Maschine-Schnittstellen (siehe hierzu später) an einem Bedienort. Der Bedienort kann sich in der Nähe der Anlage und/oder des Automatisierungssystems 8 befinden. Er kann aber auch weit hiervon entfernt sein, im Extremfall mehrere 1000 km. Über das Datennetzwerk 16 übermittelt das Automatisierungssystem 8 zumindest einen Teil der Zustandssignale Z, der Steuersignale S und/oder aus den Zustandssignalen Z und/oder den Steuersignalen S abgeleiteter Signale an die Mensch-Maschine-Schnittstelle 17. Mindestens eines der übermittelten Signale ist ein dimensionales Signal, insbesondere ein Bild. Weiterhin übermittelt die Mensch-Maschine-Schnittstelle 17 über das Datennetz 16 Vorgaben V an das Automatisierungssystem 8. Das Automatisierungssystem 8 berücksichtigt die Vorgaben V im Rahmen der Ermittlung der Steuersignale S.

Das Datennetzwerk 16 ist ein offenes Datennetzwerk. Ein offenes Datennetzwerk 16 ist ein Datennetzwerk, an das entsprechend der Darstellung in FIG 4 beliebige andere Komponenten 18 angeschlossen sein können und die ebenfalls über das Datennetzwerk 16 miteinander kommunizieren, ohne dass das Automatisierungssystem 8 oder die Mensch-Maschine-Schnittstelle 17 davon etwas wissen.

Die Mensch-Maschine-Schnittstelle 17 nimmt entsprechend der Darstellung in FIG 4 von einer Bedienperson 19 Befehle B entgegen. Die Vorgabe der Befehle B kann beispielsweise entsprechend der Darstellung in FIG 4 durch Betätigung von vorbestimmten Steuerelementen 20 der Mensch-Maschine-Schnittstelle 17 erfolgen. Die Steuerelemente 20 können eine übliche Tastatur 20a, eine übliche Maus 20b und spezielle Steuertasten 20c, 20d umfassen. Auch andere Steuerelemente 20 sind möglich. Unabhängig von der Art der Steuerelemente 20 leitet die Mensch-Maschine-Schnittstelle 17 jedoch aus den vorgegebenen Befehlen B die korrespondierenden Vorgaben V ab.

Die Übermittlung über das Datennetzwerk 16 erfolgt in beiden Kommunikationsrichtungen (also sowohl vom Automatisierungssystem 8 zur Mensch-Maschine-Schnittstelle 17 als auch von der Mensch-Maschine-Schnittstelle 17 zum Automatisierungssystem 8) mit einer maximalen Latenzzeit von 50 ms. Vorzugsweise ist die maximale Latenzzeit sogar noch kleiner und liegt - beispielsweise - bei 20 ms, 10 ms oder darunter. Die maximale Latenzzeit wird mit einer an Sicherheit grenzenden Wahrscheinlichkeit, d.h. mit einer Wahrscheinlichkeit von mindestens 99,99 %, eingehalten. Weiterhin ist die Bandbreite der Übermittlung zumindest für die Richtung vom Automatisierungssystem 8 zur Mensch-Maschine-Schnittstelle 17 so groß, dass innerhalb der genannten maximalen Latenzzeit mindestens ein Videodatenstrom mit einer Auflösung von 800 mal 600 Pixeln pro Videobild und 20 Videobildern pro Sekunde übertragen werden kann. Das Videobild ist zumindest ein Graustufenbild mit einer Bittiefe von 8 Bit. Besser ist es natürlich, wenn das Datennetzwerk 16 eine noch bessere Performanz bietet, also beispielsweise 2, 4, 6, 8 usw. derartige Videodatenströme übertragen werden können oder ein Videodatenstrom mit einer höheren Auflösung von beispielsweise 1600 mal 1600 Pixeln pro Videobild oder mehr als 20 Videobildern pro Sekunde übertragen werden kann oder die einzelnen Pixel mehr als 8 Bit aufweisen oder farbig sind. Selbstverständlich sind auch Kombinationen möglich, dass also - beispielsweise - ein einzelner Videodatenstrom mit einer Auflösung von 1600 mal 1600 Pixeln pro Videobild und 30 Videobildern pro Sekunde in Farbe und zusätzlich zwei weitere Videodatenströme mit einer Auflösung von jeweils 800 mal 800 Pixeln pro Videobild und jeweils 20 Videobildern pro Sekunde als Graustufenbilder übertragen werden können. Derartige maximale Latenzzeiten und derartige Bandbreiten können insbesondere dann realisiert werden, wenn das Datennetzwerk 16 (zumindest in einem Teilabschnitt) gemäß mindestens dem 5G-Standard ausgebildet ist. Die geforderte maximale Latenzzeit und die geforderte Bandbreite können aber auch anderweitig realisiert sein. Zur Minimierung der tatsächlich benötigten Bandbreite kann die Kommunikation zwischen dem Automatisierungssystem 8 und der Mensch-Maschine-Schnittstelle 17 insbesondere in komprimierter Form erfolgen. Ganz besonders die für die Übertragung von Videodaten erforderliche Bandbreite kann durch die Verwendung geeigneter Standards - beispielsweise MPEG - deutlich reduziert werden.

Weiterhin erfolgt die Kommunikation zwischen dem Automatisierungssystem 8 und der Mensch-Maschine-Schnittstelle 17 vorzugsweise in verschlüsselter Form erfolgen. Dadurch können Hackerangriffe und dergleichen hinreichend unwahrscheinlich gemacht werden.

Die übertragenen Signale können über die Mensch-Maschine-Schnittstelle 17 an die Bedienperson 19 ausgegeben werden. Dies gilt gleichermaßen für die "normalen" Signale als auch für die dimensionalen Signale. Im Gegensatz zum Stand der Technik ist es jedoch im Regelfall nicht erforderlich, dass die Bedienperson 19 aktiv in die Steuerung der Anlage der Grundstoffindustrie eingreift. In der Regel ist es ausreichend, wenn die Bedienperson 19 die Anlage überwacht und nur noch in Einzelfällen Steuerungseingriffe vornimmt.

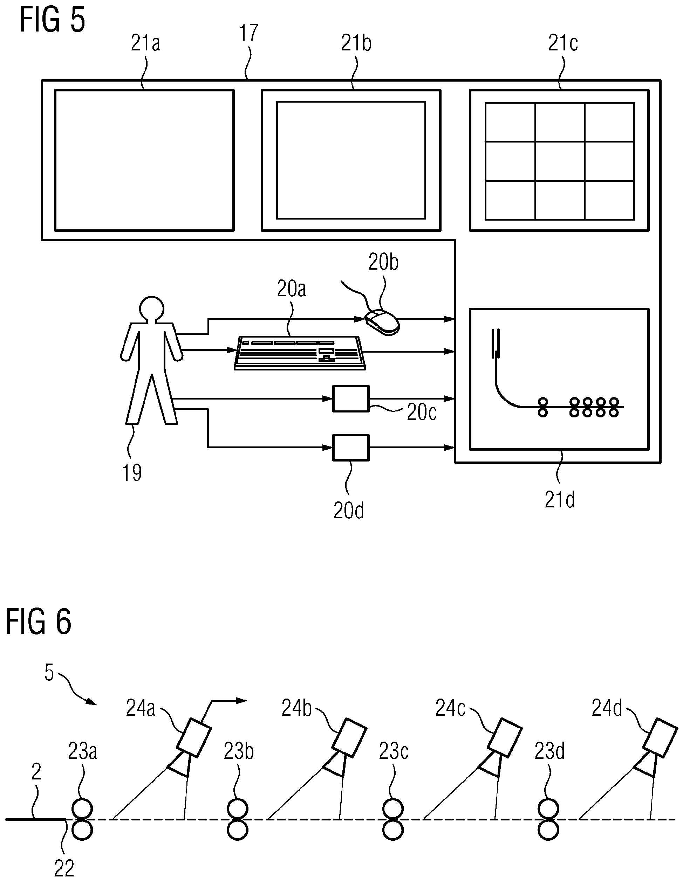

Beispielsweise kann die Mensch-Maschine-Schnittstelle 17 mehrere entsprechend der Darstellung in FIG 5 mehrere Monitore 21 aufweisen. In diesem Fall kann - beispielsweise - über (mindestens) einen Monitor 21a die Ausgabe von "normalen" Zustandssignalen Z erfolgen, gegebenenfalls einschließlich zugehöriger Steuersignale S. Vor allem aber ist ein weiterer Monitor 21b vorhanden, über den der Bedienperson 19 eines der dimensionalen Signale - insbesondere ein Bild - entsprechend der Übermittlung vom Automatisierungssystem 8 zur Mensch-Maschine-Schnittstelle 17 angezeigt wird. Gegebenenfalls kann - beispielsweise - weiterhin über (mindestens) einen weiteren Monitor 21c die Ausgabe von Bildern erfolgen, die mittels mehrerer Kameras erfasst werden, die verteilt über die Anlage der Grundstoffindustrie an bestimmten Orten angeordnet sind. Zu diesem Zweck kann der Monitor 21c - beispielsweise in neun Fenster aufgeteilt sein, über die je ein anderes Bild ausgegeben wird. Die Anzahl an Monitoren 21 und welche Informationen im einzelnen über welchen Monitor 21 an die Bedienperson 19 ausgegeben wird, ist nur beispielhaft. Von Bedeutung ist aber, dass nur ein Teil der dimensionalen Daten - beispielsweise nur ein Teil der von den Kameras anlagenseitig erfassten Videodatenströme - ausgegeben wird oder - falls auch andere dimensionale Daten ausgegeben werden - dieser Teil eine höhere Auflösung aufweist oder mit einer auf höheren Auflösung ausgegeben wird als die anderen dimensionalen Daten. Derartige dimensionale Daten werden nachstehend als bevorzugte dimensionale Daten bezeichnet.

Ein weiterer wichtiger Punkt des Betriebsverfahrens besteht darin, dass die bevorzugten dimensionalen Daten vom Zustand des Walzguts 2 und/oder der Anlage abhängen. Dies wird nachstehend unter der Annahme erläutert, dass als bevorzugte dimensionale Daten ein einzelner Videodatenstrom ausgegeben wird und dieser Videodatenstrom über den Monitor 21b ausgegeben wird. Die entsprechenden Aussagen sind aber allgemeingültig.

Beispielsweise ist es möglich, dass das Automatisierungssystem 8 in Abhängigkeit vom Zustand des Walzguts 2 und/oder der Anlage entscheidet, welche dimensionalen Signale es überhaupt an die Mensch-Maschine-Schnittstelle 17 übermittelt. In diesem Fall können natürlich auch nur die jeweils übermittelten dimensionalen Signale (gemäß Beispiel über den Monitor 21b und gegebenenfalls auch den Monitor 21c) an die Bedienperson 19 ausgegeben werden. Alternativ ist es möglich, dass zwar stets die alle dimensionalen Daten - beispielsweise die von den Kameras am Ort der Anlage erfassten Bilder - vom Automatisierungssystem 8 an die Mensch-Maschine-Schnittstelle 17 übermittelt werden, dass aber die Mensch-Maschine-Schnittstelle 17 in Abhängigkeit vom Zustand des Walzguts 2 und/oder der Anlage entscheidet, welche dimensionalen Signale sie in welchem Umfang an die Bedienperson 19 ausgibt.

Die Entscheidung, welche dimensionalen Signale das Automatisierungssystem 8 in welchem Umfang an die Mensch-Maschine-Schnittstelle 17 übermittelt bzw. welche dimensionalen Signale die Mensch-Maschine-Schnittstelle 17 in welchem Umfang an die Bedienperson 19 ausgibt, können das Automatisierungssystem 8 bzw. die Mensch-Maschine-Schnittstelle 17 beispielsweise im Falle der Ausgestaltung der Anlage als Walzwerk in Abhängigkeit vom Ort eines Bandkopfes 22 (also der Anfang des Bandes) und/oder des Bandfußes 14 in der Walzstraße treffen.

### Hierzu ein konkretes Beispiel:

Man nehme an, die Fertigstraße 5 der Anlage von FIG 1 weise entsprechend der Darstellung in den FIG 6 bis 14 - rein beispielhaft - vier Walzgerüste 23a bis 23d auf. Weiterhin sei angenommen, dass für jedes der vier Walzgerüste 23a bis 23d jeweils eine Kamera 24a bis 24d vorhanden ist, mittels derer der Bereich der Fertigstraße 5 hinter dem jeweiligen Walzgerüst 23a bis 23d erfasst wird. Das Walzgut 2 sei ein Metallband und es werde gerade der Bandkopf 22 durch die einzelnen Walzgerüste 23a bis 23d der Fertigstraße 5 gefädelt.

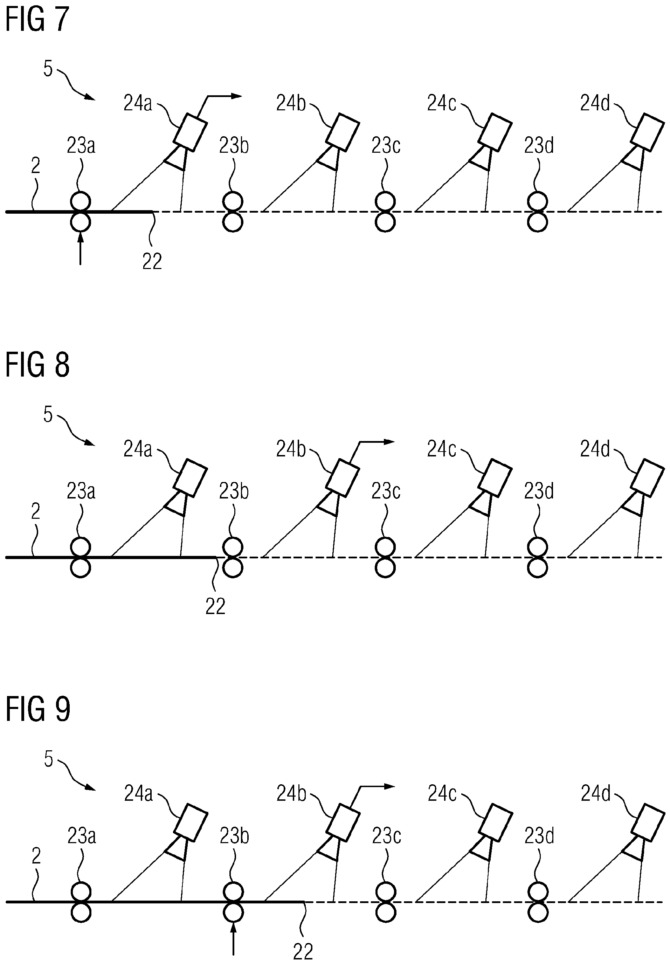

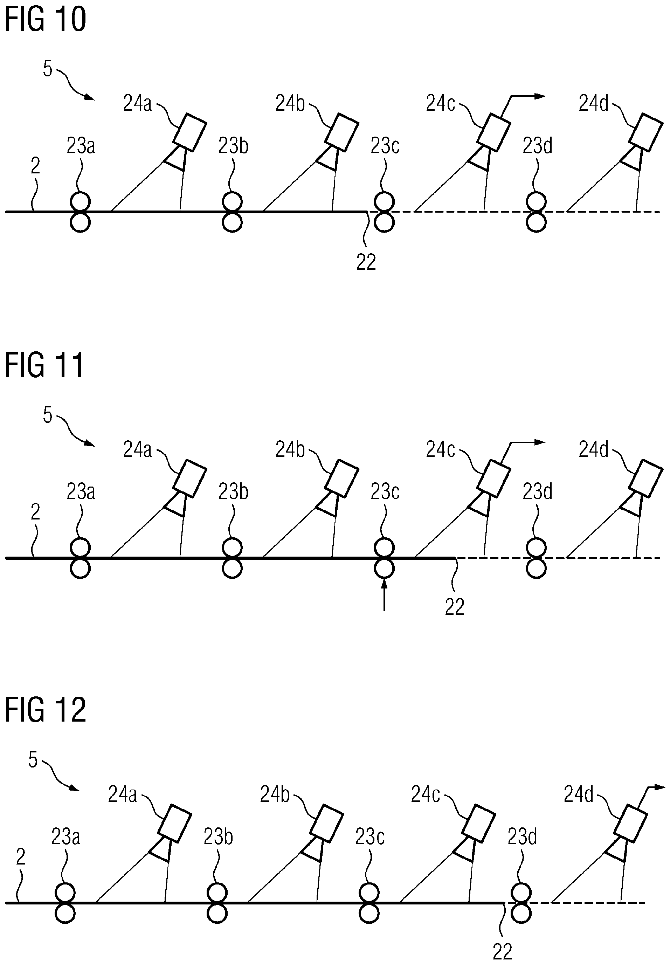

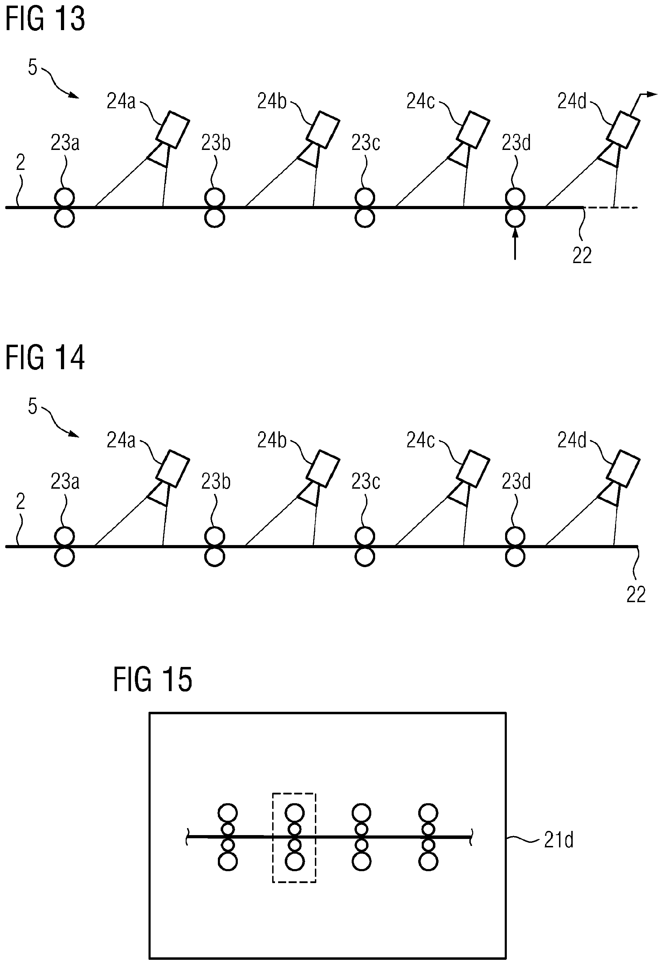

Dann befindet sich der Bandkopf 22 nacheinander
- entsprechend der Darstellung in FIG 6 einlaufseitig des Walzgerüsts 23a,
- entsprechend der Darstellung in FIG 7 auslaufseitig des Walzgerüsts 23a und einlaufseitig des Walzgerüsts 23b, und zwar vor Erreichen des Erfassungsbereichs der Kamera 24a oder im Erfassungsbereich der Kamera 24a,
- entsprechend der Darstellung in FIG 8 auslaufseitig des Walzgerüsts 23a und einlaufseitig des Walzgerüsts 23b, jedoch nicht mehr im Erfassungsbereich der Kamera 24a,
- entsprechend der Darstellung in FIG 9 auslaufseitig des Walzgerüsts 23b und einlaufseitig des Walzgerüsts 23c, und zwar vor Erreichen des Erfassungsbereichs der Kamera 24b oder im Erfassungsbereich der Kamera 24b,
- entsprechend der Darstellung in FIG 10 auslaufseitig des Walzgerüsts 23b und einlaufseitig des Walzgerüsts 23c, jedoch nicht mehr im Erfassungsbereich der Kamera 24b,
- entsprechend der Darstellung in FIG 11 auslaufseitig des Walzgerüsts 23c und einlaufseitig des Walzgerüsts 23d, und zwar vor Erreichen des Erfassungsbereichs der Kamera 24c oder im Erfassungsbereich der Kamera 24c,
- entsprechend der Darstellung in FIG 12 auslaufseitig des Walzgerüsts 23c und einlaufseitig des Walzgerüsts 23d, jedoch nicht mehr im Erfassungsbereich der Kamera 24c,
- entsprechend der Darstellung in FIG 13 auslaufseitig des Walzgerüsts 23d, und zwar vor Erreichen des Erfassungsbereichs der Kamera 24d oder im Erfassungsbereich der Kamera 24d,
- entsprechend der Darstellung in FIG 14 auslaufseitig des Walzgerüsts 23d, jedoch nicht mehr im Erfassungsbereich der Kamera 24d.

In diesem Fall kann beispielsweise
- ab einem Zeitpunkt, zu dem der Bandkopf 22 sich noch einlaufseitig des Walzgerüsts 23a befindet, das Videobild der Kamera 24a über den Monitor 21b ausgegeben werden,
- ab dem Zeitpunkt, zu dem der Bandkopf 22 aus dem Erfassungsbereich der Kamera 24a austritt, das Videobild der Kamera 24b über den Monitor 21b ausgegeben werden,
- ab dem Zeitpunkt, zu dem der Bandkopf 22 aus dem Erfassungsbereich der Kamera 24b austritt, das Videobild der Kamera 24c über den Monitor 21b ausgegeben werden,
- ab dem Zeitpunkt, zu dem der Bandkopf 22 aus dem Erfassungsbereich der Kamera 24c austritt, das Videobild der Kamera 24d über den Monitor 21b ausgegeben werden und
- ab dem Zeitpunkt, zu dem der Bandkopf 22 aus dem Erfassungsbereich der Kamera 24d austritt, keines der von den Kameras 24a bis 24d erfassten Videobilder über den Monitor 21b ausgegeben werden.

Dies ist in den FIG 6 bis 14 dadurch angedeutet, dass entsprechend dem jeweiligen Ort des Bandkopfes 22 für die entsprechende Kamera 24a bis 24d durch einen Pfeil das von der jeweiligen Kamera 24a bis 24d abgegebene Videobild angedeutet ist, das aktuell jeweils gerade an den Monitor 21b ausgegeben wird, während die von den anderen Kameras 24a bis 24d abgegebenen Videobilder jeweils nicht mit eingezeichnet sind.

Analoge Vorgehensweisen sind selbstverständlich auch beim Ausfädeln des Bandfußes 14 aus den Walzgerüsten 23a bis 23d möglich. Ähnliche Vorgehensweisen sind auch bei anderen Sachverhalten möglich.

Es ist natürlich möglich, auch gemischte Vorgehensweisen zu ergreifen. Beispielsweise ist es möglich, zusätzlich zu der obenstehend erläuterten Vorgehensweise über den Monitor 21c jeweils permanent die von den Kameras 24a bis 24d erfassten Videobilder (gegebenenfalls zusätzlich zu anderen Videobildern) auszugeben, jedoch nur in verkleinerter Form (also mit verringerter Auflösung, beispielsweise 400 x 300 Pixel) und/oder mit reduzierter Bildrate (beispielsweise mit einer Aktualisierung einmal pro Sekunde).

In ähnlicher Weise ermittelt die Mensch-Maschine-Schnittstelle 17 die Vorgaben V nicht nur in Abhängigkeit von der Betätigung der vorbestimmten Steuerelemente 20, sondern zusätzlich auch in Abhängigkeit vom Zustand des Walzguts 2 und/oder der Anlage.

### Auch hierzu ein Beispiel:

Man nehme wie zuvor an, dass der Bandkopf 22 entsprechend der Darstellung in den FIG 6 bis 14 sequenziell nacheinander durch die Walzgerüste 23a bis 23d der Fertigstraße 5 gefädelt wird. Im Regelfall erfolgt das Schwenken desjenigen Walzgerüsts 23a bis 23d, das dem Bandkopf 22 momentan unmittelbar vorgeordnet ist. Dies ist in den FIG 6 bis 14 durch einen Pfeil auf das jeweilige Walzgerüst 23a bis 23d angedeutet, dessen Walzspaltkeil durch Schwenken jeweils eingestellt wird. Wenn also - beispielsweise - der Bandkopf 22 sich zwischen den Walzgerüsten 23b und 23c befindet, wird das Walzgerüst 23b geschwenkt. Dies gilt zumindest, bis der Bandkopf 22 den Erfassungsbereich der auslaufseitig des jeweiligen Walzgerüsts 23a bis 23d angeordneten Kamera 24a bis 24d verlässt.

Im Regelfall erfolgt das Schwenken der Walzgerüste 23a bis 23d automatisiert durch das Automatisierungssystem 8. Es ist jedoch möglich, dass die Bedienperson 19 erkennt, dass die Ansteuerung des entsprechenden Walzgerüsts 23a bis 23d fehlerhaft oder unzureichend ist. In diesem Fall kann die Bedienperson 19 beispielsweise durch Betätigen der Steuertaste 20c der Mensch-Maschine-Schnittstelle 17 einen Befehl B vorgeben, dessen korrespondierende Vorgabe V für das Automatisierungssystem 8 bewirkt, dass der Walzspalt des entsprechenden Walzgerüsts 23a bis 23d an der Antriebsseite des entsprechenden Walzgerüsts 23a bis 23d vergrößert und an der Bedienseite des entsprechenden Walzgerüsts 23a bis 23d verkleinert wird. Betätigt die Bedienperson 19 hingegen die Steuertaste 20d, hat dies die umgekehrte Wirkung. In beiden Fällen aber wirkt die Betätigung der Steuertasten 20c, 20d nicht stets auf dasselbe Walzgerüst 23a bis 23d (beispielsweise das Walzgerüst 23a), sondern stets auf dasjenige Walzgerüst 23a bis 23d, das dem Bandkopf 22 momentan unmittelbar vorgeordnet ist, aus dem der Bandkopf 22 also zuletzt ausgelaufen ist.

Um der Bedienperson 19 das Verständnis über das Geschehen in der Anlage der Grundstoffindustrie noch weiter zu erleichtern, kann in der Mensch-Maschine-Schnittstelle 17 entsprechend der Darstellung in FIG 5 ein geometrisch-konstruktives Modell 25 der Anlage implementiert sein. In diesem Fall gibt die Mensch-Maschine-Schnittstelle 17 zumindest temporär zumindest einen Teil des geometrisch-konstruktiven Modells 25 an die Bedienperson 19 aus. Beispielsweise kann entsprechend der Darstellung in FIG 5 ein zusätzlicher Monitor 21d vorhanden sein, über den das geometrisch-konstruktive Modell 25 oder der Teil dieses Modells 25 an die Bedienperson 19 ausgegeben wird.

Das geometrisch-konstruktive Modell 25 ist in der Regel ein dreidimensionales Modell. Die Darstellung des Modells 25 ist hingegen zweidimensional. Die Darstellung kann aber nach Bedarf eine Schnittdarstellung, eine Draufsicht (von oben), eine Seitenansicht (beispielsweise von der Bedienseite der Walzgerüste 23a bis 23d gesehen) usw. sein. FIG 15 zeigt rein beispielhaft eine zweidimensionale Darstellung der Walzgerüste 23a bis 23d von der Seite, wie sie beispielsweise über den Monitor 21d an die Bedienperson 19 ausgegeben werden kann. Unabhängig von der Art der Darstellung hebt die Mensch-Maschine-Schnittstelle 17 in dem ausgegebenen Teil des geometrisch-konstruktiven Modells 25 jedoch optisch denjenigen Bereich hervor, den das Automatisierungssystem 8 in Abhängigkeit vom Zustand des Walzguts 2 und/oder der Anlage an die Mensch-Maschine-Schnittstelle 17 übermittelt und/oder aus dessen Bereich die dimensionalen Signale stammen, welche die Mensch-Maschine-Schnittstelle 17 in Abhängigkeit vom Zustand des Walzguts 2 und/oder der Anlage an die Bedienperson 19 ausgibt, und/oder für den die Vorgaben V bestimmt sind, welche die Mensch-Maschine-Schnittstelle 17 dynamisch in Abhängigkeit vom Zustand des Walzguts 2 und/oder der Anlage ermittelt. In dem Fall, dass es mehrere derartige Bereiche gibt, hebt die Mensch-Maschine-Schnittstelle 17 mindestens einen dieser Bereiche hervor. Gegebenenfalls können in diese Darstellung zusätzlich Hinweise eingeblendet werden, beispielsweise für die momentane Bedeutung der Steuertasten 20c und 20d.

### Auch hier wieder ein Beispiel:

Man nehme wie zuvor an, dass der Bandkopf 22 entsprechend der Darstellung in den FIG 6 bis 14 sequenziell nacheinander durch die Walzgerüste 23a bis 23d der Fertigstraße 5 gefädelt wird. Dann kann beispielsweise in der Darstellung des geometrisch-konstruktiven Modells 25 der Anlage jeweils dasjenige Walzgerüst 23a bis 23d optisch hervorgehoben werden, das dem Bandkopf 22 momentan unmittelbar vorgeordnet ist. Wenn sich also - beispielsweise - der Bandkopf 22 zwischen den Walzgerüsten 23b und 23c befindet, wird das Walzgerüst 23b optisch hervorgehoben. Dies ist in FIG 15 durch eine gestrichelte Umrahmung des Walzgerüsts 23b angedeutet. In analoger Weise kann beispielsweise während des Ausfädelns des Bandfußes 14 dynamisch jeweils dasjenige Walzgerüst 23a bis 23d optisch hervorgehoben werden, in welches der Bandfuß 14 als nächstes einläuft.

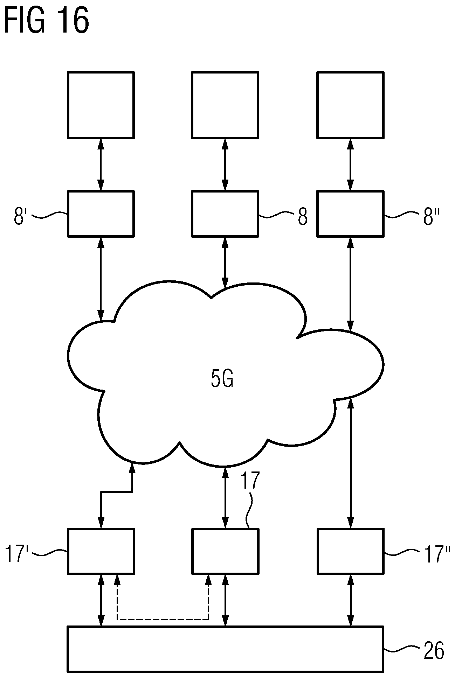

Es ist möglich, dass die Mensch-Maschine-Schnittstelle 17 die einzige am Bedienort angeordnete Mensch-Maschine-Schnittstelle 17 ist. Es ist entsprechend der Darstellung in FIG 16 jedoch ebenso möglich, dass am Bedienort zusätzlich zu der Mensch-Maschine-Schnittstelle 17 mindestens eine weitere Mensch-Maschine-Schnittstelle 17', 17" angeordnet ist. Die erstgenannte Mensch-Maschine-Schnittstelle 17 ist also nur eine von mehreren Mensch-Maschine-Schnittstellen 17, 17', 17" einer ganzen Gruppe von am Bedienort angeordneten Mensch-Maschine-Schnittstellen 17, 17', 17". Die weiteren Mensch-Maschine-Schnittstellen 17', 17" können beispielsweise entsprechend der Darstellung in FIG 16 über das Datennetzwerk 16 - statisch oder dynamisch - jeweils weitere Anlagen der Grundstoffindustrie steuern bzw. mit deren Automatisierungssystem 8', 8" zusammenwirken. Die weiteren Anlagen der Grundstoffindustrie und auch deren Automatisierungssysteme 8', 8" können gleichartig zu der erstgenannten Anlage oder verschieden hiervon sein.

Im Falle mehrerer am Bedienort angeordneter Mensch-Maschine-Schnittstellen 17, 17', 17" sind die Mensch-Maschine-Schnittstellen 17, 17', 17" entsprechend der Darstellung in FIG 16 vorzugsweise über eine Datenverbindung 26 miteinander vernetzt. Dadurch kann insbesondere die Bedienperson 19 dynamisch festlegen, welche der Mensch-Maschine-Schnittstellen 17 der genannten Gruppe mit dem Automatisierungssystem 8 der Anlage kommuniziert. Die Bedienperson 19 kann also die Kommunikation mit dem Automatisierungssystem 8 dynamisch von der Mensch-Maschine-Schnittstelle 17 zu einer der weiteren Mensch-Maschine-Schnittstellen 17', 17" und zurück transferieren. Beispielsweise kann unter normalen Umständen die Mensch-Maschine-Schnittstelle 17 mit der in der Mitte dargestellten Anlage der Grundstoffindustrie zusammenwirken. Es ist jedoch möglich, das Zusammenwirken temporär beispielsweise auf die Mensch-Maschine-Schnittstelle 17' zu transferieren. Dies ist in FIG 16 durch den gestrichelten Doppelpfeil zwischen den beiden genannten Mensch-Maschine-Schnittstellen 17, 17' angedeutet. Der Transfer des Zusammenwirkens kann nach Bedarf vollständig sein oder nur einen Teil der Steuerung der Anlage der Grundstoffindustrie umfassen.

Wie in FIG 1 angedeutet, kann weiterhin am Ort der Anlage ein Leitstand 27 angeordnet sein. Der Leitstand 27 kann die volle Funktionalität oder einen Teil der Funktionalität der Mensch-Maschine-Schnittstelle 17 aufweisen. Mittels des Leitstandes 27 kann die Bedienperson 19 oder eine weitere Bedienperson 19' bei Bedarf Befehle B' vorgeben, die von dem Leitstand 27 in Vorgaben V' für das Automatisierungssystem 8 umgesetzt werden. Dadurch kann bei Bedarf - beispielsweise bei einer Wartung der Anlage oder in einer Art Notbetrieb der Anlage oder wenn aus sonstigen Gründen eine Steuerung der Anlage vor Ort beabsichtigt ist - eine direkte Steuerung der Anlage mittels des vor Ort angeordneten Leitstand des 27 erfolgen. Diese Steuerung erfolgt unter Umgehung des Datennetzwerks 16 und der Mensch-Maschine-Schnittstelle 17. Die Befehle B' und hiermit korrespondierend die Vorgaben V' können mit den Befehlen B und den Vorgaben V übereinstimmen, die im Normalfall von der Mensch-Maschine-Schnittstelle 17 entgegengenommen bzw. über das Datennetzwerk 16 an das Automatisierungssystem 8 übermittelt werden.

Die vorliegende Erfindung weist viele Vorteile auf. Insbesondere wird die Möglichkeit geschaffen, eine Anlage zum Herstellen und/oder Behandeln eines Walzguts 2 aus Metall, also eine Anlage, bei der eine geringe Reaktionszeit gewährleistet sein muss, fernbedient von einem beliebigen Bedienort aus zu steuern. Die Bedienperson 19 wird in erheblichem Umfang von manuellen Steuerungseingriffen entlastet. Durch die dynamische Anzeige von dimensionalen Signalen kann die Anzahl an erforderlichen Monitoren 21a bis 21d und damit die Komplexität der Überwachung der Anlage in einem überschaubaren Rahmen gehalten werden. Weiterhin wird die Bedienperson 19 von Bedieneingaben beispielsweise für ein Umschalten von Videobildern entlastet. Im Ergebnis wird die Bedienung hierdurch deutlich vereinfacht. Durch die Anordnung mehrerer Mensch-Maschine-Schnittstellen 17, 17', 17" am Bedienort, wobei die Mensch-Maschine-Schnittstellen 17, 17', 17" miteinander vernetzt sind, kann eine erhöhte Flexibilität und Effizienz bei der Steuerung mehrerer Anlagen erreicht werden. Beispielsweise kann beim Auftreten bestimmter Probleme bei der Steuerung der Anlage die Steuerung von der Mensch-Maschine-Schnittstelle 17 zu einer anderen Mensch-Maschine-Schnittstelle 17', 17" verlagert werden, deren Bedienperson 19 hierfür eine bessere Expertise aufweist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

### Bezugszeichenliste

- 1, 3: Teilanlagen
- 2: Walzgut
- 4: Vorwalzwerk
- 5: Fertigstraße
- 6: Haspel
- 7: Kühlstrecke
- 8, 8', 8": Automatisierungssysteme
- 9: Sensoren
- 10: Aggregate
- 11: Aktoren
- 12: Coil
- 13, 24a bis 24d: Kamera
- 14: Bandfuß
- 15: Coilauge
- 16: Datennetzwerk
- 17, 17', 17": Mensch-Maschine-Schnittstellen
- 18: andere Komponenten
- 19, 19': Bedienpersonen
- 20, 20a bis 20d: Steuerelemente
- 21, 21a bis 21d: Monitore
- 22: Bandkopf
- 23a bis 23d: Walzgerüste
- 25: geometrisch-konstruktives Modell
- 26: Datenverbindung
- 27: Leitstand

- B, B': Befehle
- S: Steuersignale
- V, V': Vorgaben
- Z: Zustandssignale

## Patentansprüche

1. Betriebsverfahren für eine Anlage zum Herstellen und/oder Behandeln eines Walzguts (2) aus Metall,
- wobei mittels Sensoren (9) für Zustände von Aggregaten (10) der Anlage signifikante Zustandssignale (Z) erfasst werden,
- wobei die erfassten Zustandssignale (Z) von den Sensoren (9) an ein Automatisierungssystem (8) übermittelt werden,
- wobei ein Teil der von den Sensoren (9) erfassten Zustandssignale (Z) dimensionale Signale sind,
- wobei das Automatisierungssystem (8) unter Berücksichtigung der übermittelten Zustandssignale (Z) Steuersignale (S) für den Aggregaten (10) zugeordnete Aktoren (11) ermittelt und die Aktoren (11) entsprechend den ermittelten Steuersignalen (S) ansteuert,
- wobei das Automatisierungssystem (8) einen Teil der Steuersignale (S) unter Berücksichtigung der dimensionalen Signale ermittelt,
- wobei das Automatisierungssystem (8) mindestens ein modellbasiertes System umfasst, welches das Verhalten der Anlage und/oder des Walzguts (2) auf Basis mathematisch-physikalischer Gleichungen in Echtzeit modelliert,
- wobei das Automatisierungssystem (8) dem modellbasierten System einen Teil der Zustandssignale (Z) zuführt und mittels des modellbasierten Systems einen Teil der Steuersignale (S) für die Aktoren (11) ermittelt,
- wobei das Automatisierungssystem (8) zumindest einen Teil der Zustandssignale (Z), der Steuersignale (S) und/oder aus den Zustandssignalen (Z) und/oder den Steuersignalen (S) abgeleiteter Signale über ein offenes Datennetzwerk (16) an eine an einem Bedienort angeordnete Mensch-Maschine-Schnittstelle (17) übermittelt,
- wobei die an die Mensch-Maschine-Schnittstelle (17) übermittelten Signale mindestens ein dimensionales Signal umfassen,
- wobei die Mensch-Maschine-Schnittstelle (17) von einer Bedienperson (19) durch Betätigung von vorbestimmten Steuerelementen (20) der Mensch-Maschine-Schnittstelle (17) Befehle (B) entgegennimmt und mit den Befehlen (B) korrespondierende Vorgaben (V) über das offene Datennetzwerk (16) an das Automatisierungssystem (8) übermittelt,
- wobei das Automatisierungssystem (8) die Vorgaben (V) im Rahmen der Ermittlung der Steuersignale (S) berücksichtigt,
- wobei die Übermittlung über das offene Datennetzwerk (16) in beiden Kommunikationsrichtungen mit einer an Sicherheit grenzenden Wahrscheinlichkeit mit einer maximalen Latenzzeit von 50 ms erfolgt und die Bandbreite der Übermittlung zwischen dem Automatisierungssystem (8) und der Mensch-Maschine-Schnittstelle (17) so groß ist, dass innerhalb der maximalen Latenzzeit mindestens ein Videodatenstrom mit einer Auflösung von 800 mal 600 Pixeln pro Videobild und 20 Videobildern pro Sekunde übertragen werden kann,
- wobei das Automatisierungssystem (8) in Abhängigkeit vom Zustand des Walzguts (2) und/oder der Anlage entscheidet, welche dimensionalen Signale es an die Mensch-Maschine-Schnittstelle (17) übermittelt, und/oder die Mensch-Maschine-Schnittstelle (17) in Abhängigkeit vom Zustand des Walzguts (2) und/oder der Anlage entscheidet, welche dimensionalen Signale sie in welchem Umfang an die Bedienperson (19) ausgibt,
- wobei die Mensch-Maschine-Schnittstelle (17) die Vorgaben (V) dynamisch in Abhängigkeit von der Betätigung der vorbestimmten Steuerelemente (20) und zusätzlich in Abhängigkeit vom Zustand des Walzguts (2) und/oder der Anlage ermittelt.

2. Betriebsverfahren nach Anspruch 1,
**dadurch gekennzeichnet,**
**dass** die Anlage eine Stranggießanlage und/oder ein Walzwerk mit oder ohne dem Walzwerk nachgeordnete Kühlstrecke und/oder eine Behandlungslinie zum thermischen Behandeln und/oder zur Oberflächenbehandlung des Walzguts (2) umfasst.

3. Betriebsverfahren nach Anspruch 1 oder 2,
**dadurch gekennzeichnet,**
**dass** das offene Datennetzwerk (16) zumindest in einem Teilabschnitt gemäß mindestens dem 5G-Standard ausgebildet ist.

4. Betriebsverfahren nach Anspruch 1, 2 oder 3,
**dadurch gekennzeichnet,**
**dass** in der Mensch-Maschine-Schnittstelle (17) ein geometrisch-konstruktives Modell (25) der Anlage implementiert ist, dass die Mensch-Maschine-Schnittstelle (17) zumindest einen Teil des geometrisch-konstruktiven Modells (25) an die Bedienperson (19) ausgibt und dass die Mensch-Maschine-Schnittstelle (17) in dem ausgegebenen geometrisch-konstruktiven Modell (25) oder dem ausgegebenen Teil des geometrisch-konstruktiven Modells (25) optisch den Bereich oder mindestens einen der Bereiche hervorhebt, den das Automatisierungssystem (8) in Abhängigkeit vom Zustand des Walzguts (2) und/oder der Anlage an die Mensch-Maschine-Schnittstelle (10) übermittelt und/oder aus dessen Bereich die dimensionalen Signale stammen, welche die Mensch-Maschine-Schnittstelle (17) in Abhängigkeit vom Zustand des Walzguts (2) und/oder der Anlage an die Bedienperson (19) ausgibt, und/oder für den die Vorgaben (V) bestimmt sind, welche die Mensch-Maschine-Schnittstelle (17) dynamisch in Abhängigkeit vom Zustand des Walzguts (2) und/oder der Anlage ermittelt.

5. Betriebsverfahren nach einem der obigen Ansprüche,
**dadurch gekennzeichnet,**
**dass** die Kommunikation zwischen dem Automatisierungssystem (8) und der Mensch-Maschine-Schnittstelle (17) in komprimierter Form erfolgt.

6. Betriebsverfahren nach einem der obigen Ansprüche,
**dadurch gekennzeichnet,**
**dass** die Kommunikation zwischen dem Automatisierungssystem (8) und der Mensch-Maschine-Schnittstelle (17) in verschlüsselter Form erfolgt.

7. Betriebsverfahren nach einem der obigen Ansprüche,
**dadurch gekennzeichnet,**
**dass** am Bedienort zusätzlich zu der Mensch-Maschine-Schnittstelle (17) mindestens eine weitere Mensch-Maschine-Schnittstelle (17', 17") angeordnet ist, die mit der Mensch-Maschine-Schnittstelle (17) vernetzt ist, und dass die Bedienperson (19) die Kommunikation mit dem Automatisierungssystem (8) dynamisch von der Mensch-Maschine-Schnittstelle (17) zu der weiteren Mensch-Maschine-Schnittstelle (17', 17") und zurück transferieren kann.

8. Betriebsverfahren nach einem der obigen Ansprüche,
**dadurch gekennzeichnet,**
**dass** die dem modellbasierten System von dem Automatisierungssystem (8) zugeführten Zustandssignale (Z) zumindest teilweise dimensionale Signale sind.

9. Gesamtsystem einer Anlage zum Herstellen und/oder Behandeln eines Walzguts (2) aus Metall,
- wobei das Gesamtsystem am Ort der Anlage angeordnete Sensoren (9) aufweist, mittels derer für Zustände von Aggregaten (10) der Anlage signifikante Zustandssignale (Z) erfasst werden,
- wobei das Gesamtsystem ein Automatisierungssystem (8) aufweist, das mit den Sensoren (9) zur Übermittlung der erfassten Zustandssignale (Z) von den Sensoren (9) an das Automatisierungssystem (8) verbunden ist,
- wobei ein Teil der von den Sensoren (9) erfassten Zustandssignale (Z) dimensionale Signale sind,
- wobei das Gesamtsystem am Ort der Anlage angeordnete, den Aggregaten (10) zugeordnete Aktoren (11) aufweist, die mit dem Automatisierungssystem (8) zur Ansteuerung der Aktoren (11) entsprechend ermittelten Steuersignalen (S) verbunden sind,
- wobei das Automatisierungssystem (8) die Steuersignale (S) für die Aktoren (11) unter Berücksichtigung der übermittelten Zustandssignale (Z) ermittelt,
- wobei das Automatisierungssystem (8) einen Teil der Steuersignale (S) unter Berücksichtigung der dimensionalen Signale ermittelt,
- wobei das Automatisierungssystem (8) mindestens ein modellbasiertes System umfasst, welches das Verhalten der Anlage und/oder des Walzguts (2) auf Basis mathematisch-physikalischer Gleichungen in Echtzeit modelliert,
- wobei das Automatisierungssystem (8) dem modellbasierten System einen Teil der Zustandssignale (Z) zuführt und mittels des modellbasierten Systems einen Teil der Steuersignale (S) für die Aktoren (11) ermittelt,
- wobei das Gesamtsystem eine an einem Bedienort angeordnete Mensch-Maschine-Schnittstelle (17) aufweist, die mit dem Automatisierungssystem (8) über ein offenes Datennetzwerk (16) verbunden ist,
- wobei das Automatisierungssystem (8) zumindest einen Teil der Zustandssignale (Z), der Steuersignale (S) und/oder aus den Zustandssignalen (Z) und/oder den Steuersignalen (S) abgeleiteter Signale über das offene Datennetzwerk (16) an die Mensch-Maschine-Schnittstelle (17) übermittelt,
- wobei die an die Mensch-Maschine-Schnittstelle (17) übermittelten Signale mindestens ein dimensionales Signal umfassen,
- wobei die Mensch-Maschine-Schnittstelle (17) von einer Bedienperson (19) durch Betätigung von vorbestimmten Steuerelementen (20) der Mensch-Maschine-Schnittstelle (17) Befehle (B) entgegennimmt und mit den Befehlen (B) korrespondierende Vorgaben (V) über das offene Datennetzwerk (16) an das Automatisierungssystem (8) übermittelt,
- wobei das Automatisierungssystem (8) die Vorgaben (V) im Rahmen der Ermittlung der Steuersignale (S) berücksichtigt,
- wobei die Übermittlung über das offene Datennetzwerk (16) in beiden Kommunikationsrichtungen mit einer an Sicherheit grenzenden Wahrscheinlichkeit mit einer maximalen Latenzzeit von 50 ms erfolgt und die Bandbreite der Übermittlung zwischen dem Automatisierungssystem (8) und der Mensch-Maschine-Schnittstelle (17) so groß ist, dass innerhalb der maximalen Latenzzeit mindestens ein Videodatenstrom mit einer Auflösung von 800 mal 600 Pixeln pro Videobild und 20 Videobildern pro Sekunde übertragen werden kann,
- wobei das Automatisierungssystem (8) in Abhängigkeit vom Zustand des Walzguts (2) und/oder der Anlage entscheidet, welche dimensionalen Signale es an die Mensch-Maschine-Schnittstelle (17) übermittelt, und/oder die Mensch-Maschine-Schnittstelle (17) in Abhängigkeit vom Zustand des Walzguts (2) und/oder der Anlage entscheidet, welche dimensionalen Signale sie in welchem Umfang an die Bedienperson (19) ausgibt,
- wobei die Mensch-Maschine-Schnittstelle (17) die Vorgaben (V) dynamisch in Abhängigkeit von der Betätigung der vorbestimmten Steuerelemente (20) und zusätzlich in Abhängigkeit vom Zustand des Walzguts (2) und/oder der Anlage ermittelt.

10. Gesamtsystem nach Anspruch 9,
**dadurch gekennzeichnet,**
**dass** die Anlage eine Stranggießanlage und/oder ein Walzwerk mit oder ohne dem Walzwerk nachgeordnete Kühlstrecke und/oder eine Behandlungslinie zum thermischen Behandeln und/oder zur Oberflächenbehandlung des Walzguts (2) umfasst.

11. Gesamtsystem nach Anspruch 9 oder 10,
**dadurch gekennzeichnet,**
**dass** das offene Datennetzwerk (16) zumindest in einem Teilabschnitt gemäß mindestens dem 5G-Standard ausgebildet ist.

12. Gesamtsystem nach Anspruch 9, 10 oder 11,
**dadurch gekennzeichnet,**
**dass** in der Mensch-Maschine-Schnittstelle (17) ein geometrisch-konstruktives Modell (25) der Anlage implementiert ist, dass die Mensch-Maschine-Schnittstelle (17) zumindest einen Teil des geometrisch-konstruktiven Modells (25) an die Bedienperson (19) ausgibt und dass die Mensch-Maschine-Schnittstelle (17) in dem ausgegebenen geometrisch-konstruktiven Modell (25) oder dem ausgegebenen Teil des geometrisch-konstruktiven Modells (25) optisch den Bereich oder mindestens einen der Bereiche hervorhebt, den das Automatisierungssystem (8) in Abhängigkeit vom Zustand des Walzguts (2) und/oder der Anlage an die Mensch-Maschine-Schnittstelle (10) übermittelt und/oder aus dessen Bereich die dimensionalen Signale stammen, welche die Mensch-Maschine-Schnittstelle (17) in Abhängigkeit vom Zustand des Walzguts (2) und/oder der Anlage an die Bedienperson (19) ausgibt, und/oder für den die Vorgaben (V) bestimmt sind, welche die Mensch-Maschine-Schnittstelle (17) dynamisch in Abhängigkeit vom Zustand des Walzguts (2) und/oder der Anlage ermittelt.

13. Gesamtsystem nach einem der Ansprüche 9-12,
**dadurch gekennzeichnet,**
**dass** die Kommunikation zwischen dem Automatisierungssystem (8) und der Mensch-Maschine-Schnittstelle (17) in komprimierter Form erfolgt.

14. Gesamtsystem nach einem der Ansprüche 9 bis 13,
**dadurch gekennzeichnet,**
**dass** die Kommunikation zwischen dem Automatisierungssystem (8) und der Mensch-Maschine-Schnittstelle (17) in verschlüsselter Form erfolgt.

15. Gesamtsystem nach einem der Ansprüche 9 bis 14,
**dadurch gekennzeichnet,**
**dass** das Gesamtsystem am Bedienort zusätzlich zu der Mensch-Maschine-Schnittstelle (17) mindestens eine weitere Mensch-Maschine-Schnittstelle (17', 17") aufweist, die mit der Mensch-Maschine-Schnittstelle (17) vernetzt ist, und dass die Bedienperson (19) die Kommunikation mit dem Automatisierungssystem (8) dynamisch von der Mensch-Maschine-Schnittstelle (17) zu der weiteren Mensch-Maschine-Schnittstelle (17', 17") und zurück transferieren kann.

16. Gesamtsystem nach einem der Ansprüche 9 bis 15,
**dadurch gekennzeichnet,**
**dass** die dem modellbasierten System von dem Automatisierungssystem (8) zugeführten Zustandssignale (Z) zumindest teilweise dimensionale Signale sind.
